# EUROPEAN PATENT APPLICATION

(11) **EP 2 077 517 A1**
(43) Date of publication of application: **08.07.2009**
(21) Application number: 07291650.5
(22) Date of filing: 28.12.2007
(51) Int. Cl.: G06F 21/20, G06F 7/10

(54) **Delegation of access conditions between portable tokens**

(71) Applicant: Gemalto SA, 92190 Meudon (FR)
(72) Inventor: Faher, Mourad, 92197 Meudon Cedex (FR)
(74) Representative: Wlodarczyk, Lukasz Georges Kazimierz

(57) **Abstract**

The invention relates to a system comprising two portable tokens (ICC1, ICC2), the first portable token (ICC1) being set to enforce an access condition (AC), wherein the access condition (AC) is stored in the first portable token (ICC1) and comprises an identifier of an authentication method. The access condition (AC) contains a reference to the second portable token (ICC2). For the access condition (AC) to be met, the first portable token (ICC1) must be notified of the success of the authentication method by the second portable token (ICC2).

The invention also relate to a portable token set to delegate access conditions to another portable token, and to a method for delegating access conditions between portable tokens.

## Description

The invention relates to a portable token set to delegate part of the enforcement of an access condition to another portable token. It also relates to a system comprising two portable tokens, wherein one of the portable tokens is set to delegate part of the enforcement of an access condition to the other portable token. It also relates to a method for a portable token to delegate part of the enforcement of an access condition to another portable token.

In the context of the invention, portable tokens are electronic devices which can be easily carried by an individual. Portable tokens can typically receive orders from other entities in the form of commands. Common examples of portable tokens include smart cards, USB keys, MMC or SD cards, etc. smart cards have various applications (e.g. bank cards for financial applications, SIM cards for mobile telephony, contact-less cards such as Navigo for public transportation, healthcare cards such as Sesame Vitale, etc.). Smart cards can implement a contact interface, a contact-less interface, or both contact and contact-less interfaces. They can also offer different types of interfaces in the same category (e.g. ISO 7816 and USB are both contact interfaces which can be simultaneously supported by a given smart card).

Certain portable tokens offer security features allowing them to protect access to their features based on access conditions. An entity willing to read certain private data from such portable token may be denied access if it does not prove its knowledge of a PIN code or of a cryptographic key, while the same entity would be authorized to read public data or to call all sorts of innocuous commands. Access conditions can be viewed as rules. Access conditions are typically stored inside the portable token, and verified by the portable token itself (which is typically equipped with a processor or with dedicated circuitry able to carry out this task). An access condition is typically linked to a specific element in the portable token (for example a file, or a part of a file, or a software application installed on the portable token, or a subset of the functions offered by such software application). An access condition is also typically linked to a given action (the action being associated with the element to which the access condition is linked). There may be plenty of possible actions for each element. For example, a file can be read, initialized, deleted (the file no longer exists), updated, erased (the file exists but is empty), etc. A software application can be executed, customized, uninstalled, etc. Therefore there can be one access condition for reading file number 1, another access condition for deleting file number 1, and yet another condition for reading the third segment of file number 2. An access condition is said to be met when the rule specified in the access condition is verified, which allows the execution of the action (specified in the access condition) on the element (specified in the access condition). An access condition typically contains an identifier of an authentication method which has to be carried out successfully in order for the access condition to be met. An authentication method refers both to an authentication algorithm and to a credential. For example, an authentication algorithm can be a PIN code comparison, but it is necessary to know which PIN code (i.e. which credential) to compare in order to be able to carry out the authentication method. Quite often, a type of credential (e.g. an RSA key) is associated with an optimal authentication method (e.g. an RSA signature of a challenge, using the RSA key referred to). Therefore by identifying the credential to be verified (e.g. RSA key number 12), one may implicitly identify the whole authentication method. Examples of identifiers of authentication methods may therefore include:
- CHV2, which means that in order to meet the access condition, a PIN code called CHV2 should be verified. There may typically be several PIN codes in a portable token, hence the reference (here CHV2). A PIN based authentication method is typically a mere comparison of a PIN code provided by the entity willing to meet the access condition with the PIN code stored in the portable token, and therefore in this example the identifier of the PIN code is also the identifier of the authentication method (which is implicit), although it would be possible to have a more elaborate authentication method identifier to offer the possibility of having several authentication algorithms based on the same credential,
- NEV (never), which means that it is not possible to meet the access condition and that any attempt to execute the specified action on the specified element will be denied,
- ALW (always), which means that the access condition is always met and that any attempt to execute the specified action on the specified element will be accepted without restriction,
- AES4, which means that the credential consisting of AES key number 4 should be used for the authentication. In this example, the authentication method is implicitly a challenge response authentication based on AES key number 4. A mere key comparison (as is done with PINs) would be clearly insecure since it would require communicating the key outside the portable token, and the outside world is typically considered insecure.

On ISO 7816 compliant portable tokens, access conditions defining the level of protection of commands giving access to sensitive data or/and services, including cryptographic services such as digital signature, is mainly performed via ISO/IEC 7816-4 security architecture (see for example clause 5.4). Security attributes are attached for example to data (data comprise files and logical data structures), or to cryptographic objects (including objects nested in files or in logical data structures), and typically comprise access mode bytes and related security conditions. Such security attributes are generally nested in a FCP template (File Control Parameter, see for example clause 5.3.3). ISO/IEC 7816-4 standard does not address the possibility for access conditions to refer to a portable token other than the current one.

Some systems comprise two portable tokens, for example an e-Health card and a doctor's card. It is sometimes desirable for the holder of one of the portable tokens to be able to access certain functions or data of the other portable token. For example the physician may have to access some private patient's medical data located in the e-Health card, and the only way the physician can authenticate is for example the physician PIN code verification on his doctor's card (the doctor typically does not know the patient's PIN code and typically should not know it). The data that are subject to such a protection may also be a specific bookmark with which the application running on the physician's computer can access a remote server securely hosting these data. In known systems, the two portable tokens (which are in general smart cards) are typically inserted simultaneously in a double slot reader, and the holder of one portable token can read data from the other portable token. Proprietary implementations are typically embedded in the micro-processor of double-slot reader devices. Such readers keep track of the PIN verification on the doctor's smart card inserted in the first slot so that access to data hosted on the patient card inserted in the second slot can be allowed. This kind of approach is quite secure, but remains costly and restricted to the use of specific readers, which are typically not compliant with any existing or currently prepared standards.

It is an object of the invention to propose a portable token, a system and a method, which allow simple and cost effective delegation of enforcement of access conditions from a portable token to another portable token. In particular, it is an object of the invention to avoid dependency on the implementation of a dedicated protocol for delegation of enforcement of authentication inside a double slot reader.

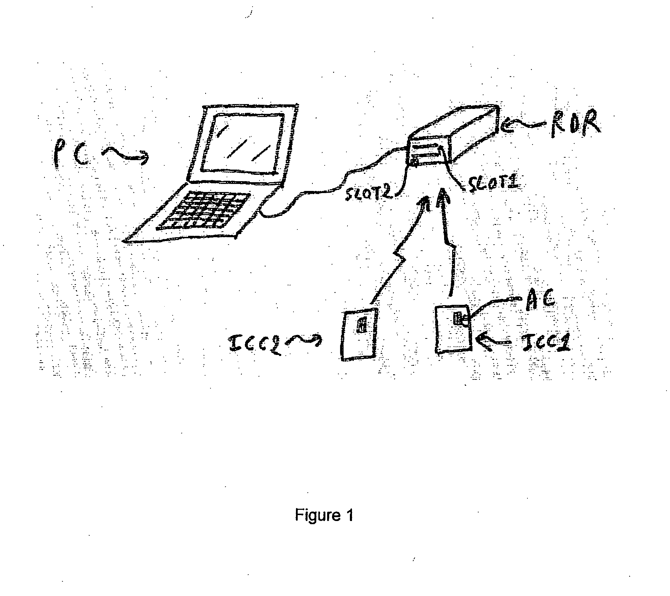

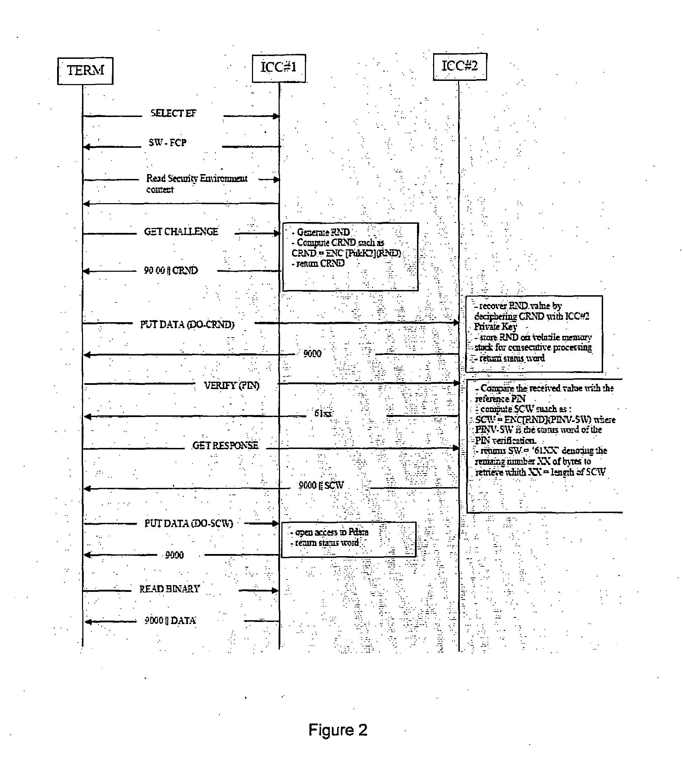

The invention and its advantages will be explained more in details in the following specification referring to the appended drawings, in which Figure 1 represents a system according to the invention, and Figure 2 represent a method according to the invention.

A system according to a preferred embodiment of the invention comprises two portable tokens ICC1, ICC2. The two portable tokens can be for example smart cards. The portable tokens are set to communicate together. For example, the two portable token can be connected to a terminal TERM which routes communications between the tokens. The terminal TERM may comprise a personal computer PC (e.g. a laptop) to which a double slot reader RDR is connected, the reader RDR comprising a first slot SLOT1 to which the first portable token ICC1 can be connected and a second slot SLOT2 to which the second portable token ICC2 can be connected. Alternatively, it is also possible to connect to single slots readers (e.g. PC/SC compliant readers) to the personal computer PC, and to connect each of the portable tokens to one of the readers. The readers (either double or single slot) are preferably standard, off the shelf readers. The first portable token ICC1 is set to enforce an access condition AC. The access condition AC is stored in the first portable token ICC1. Typically, the access condition AC can be a rule according to state of the art (e.g. as prescribed in ISO 7816-4). The access condition AC comprises an identifier of an authentication method. The access condition AC further contains a reference to the second portable token ICC2. For the access condition AC to be met, the first portable token ICC1 must be notified of the success of the authentication method by the second portable token ICC2. In preferred embodiments, it is the terminal which acts as a master, and sends requests to the first and second portable tokens, however in alternative embodiments a portable token can act as a master, for example the first portable token can instruct the second portable token (possibly through the terminal) to expect an authentication. In alternative embodiments the portable tokens have contact-less capabilities and communicate directly one with the other. This typically requires a power supply (e.g. battery) in at least one of the portable tokens, unless both are powered by a terminal which only acts a power generator. The two portable tokens are typically located in the same space (e.g. the two holders of portable tokens meet in a room), however in alternative embodiments they are distant. They may for example be connected through a network (e.g. internet), which may allow (for example) a doctor to remotely access a patient data without forcing the patient to visit the doctor. In such embodiment, each portable token would typically be connected to a personal computer (respectively the personal computer of the doctor and the personal computer of the patient), the two personal computers being connected together through the internet, possibly via a server of a national healthcare organism, or directly (e.g. in peer to peer mode).

In preferred embodiments, the system is arranged so that the first portable token ICC1 is set to generate a random number, to send the random number to the second portable token ICC2, and to accept the notification from the second portable token ICC2 only if it verifies that the second portable token ICC2 has sealed the notification with the random number. Different techniques for carrying out the sealing are described below. This is extremely advantageous in order to avoid replay attacks. Replay attacks consist, in this context, in a hacker intercepting one legitimate notification (which is typically hard, but sometimes possible especially if the portable tokens are connected through the internet), and replaying it at a later stage (i.e. the hacker would simulate the second portable token by sending the previously intercepted notification) in order to access all sorts of protected data in the first portable token.

In preferred embodiments, the sealing is achieved as follows. The second portable token ICC2 is set to store a private key (which is a private key according to an asymmetric cryptography algorithm such as RSA, elliptic curves, etc.). This private key can be stored when the second portable token is manufactured or personalized, or it can be generated on the field (e.g. the portable token may embed a known key generation mechanism for that purpose), or it can be loaded inside the portable token using secure mechanisms. The second portable token ICC2 is set to concatenate the received random number and the notification to be sent. The random may appear first and the notification second or vice versa. It is even possible to multiplex the random and the notification, for example one byte from the random, then one byte from the notification, then the following byte from the random, the following byte from the notification, etc. The second portable token ICC2 is set to sign the concatenation with the private key. In order to carry out the signature, it is advantageous to hash the concatenation (e.g. with SHA-1, or MD5, etc.), and to sign the hash. But it is also possible to sign the concatenation directly, provided the concatenation is short enough (for example, if RSA is used, the concatenation must be shorter than the modulus of the RSA private key if no hash is done, or alternatively the concatenation must be made shorter with a mechanism such as XORing of sub-blocks, but this is not recommended in general). The hash of the concatenation (or the concatenation itself if it is not hashed, or the shortened concatenation if it is not hashed and it was too long) is typically padded (preferably with a cryptographically secure padding as known in the art) before signing. The second portable token ICC2 is set to send the signature together with the notification to the first portable token ICC1. The first portable token ICC1 is set to obtain a public key of the second portable token ICC2 corresponding to the above mentioned private key. The public key may have been written in the first portable token ICC1 during its manufacturing or personalization, or it may be written at a later time. The public key, especially if it is loaded at a later time, may be embedded in a certificate, such as an X.509 v3 compliant certificate. It is advantageous to verify that the signature of the certificate is valid and that the certificate has not been revoked using techniques such as CRL verification or OCSP. The first portable token ICC1 is set to verify that the signature of the concatenation is correct, by using the public key. It is necessary to carry the same operation as the second portable token ICC2 on the notification (i.e. to concatenate it with the random in the same manner, and either to hash it or if necessary to shorten it, and then to pad it). The result of this operation should be identical to the result of a public key operation carried out on the signature with the corresponding public key.

In an alternative embodiment, the system carries out the sealing as follows. The first portable token ICC1 is set to obtain a public key of the second portable token ICC2, for example in a manner described above, and to encrypt the random number with the public key before sending it. Before encrypting the random, the random is preferably padded with an appropriate padding. If the random is too long (for example if it is longer than the modulus of an RSA public key, in case an RSA public key is used) it is possible to use a session key (e.g. another random number but short enough, encrypted by the public RSA key) to encrypt the random in a manner known in the art with the session key. If the random is too long, it is also possible to divide the random in blocks short enough and to encrypt each block (but this technique is usually not the best in terms of security). The second portable token ICC2 is set to store a private key corresponding to the public key (the private key can be stored for example in a manner similar to one of the manners described above for the previous sealing embodiment). The second portable token ICC2 is set to decrypt the random number with the private key, and to encrypt the notification with a symmetric key which value is equal to the random number for example the random number may define an AES, a DES, a 3DES, or an RC4, session key.

In another alternative embodiment, the system carries out the sealing as follows. The first and second portable tokens ICC1, ICC2 are set to share a symmetric key. The symmetric key can be for example a DES, a 3DES, an AES, or an RC4 or any other secure enough symmetric key. The symmetric key can be written in both portable tokens when they are manufactured or personalized, or can be written securely at a later stage. The symmetric key can be a diversified key. For example, each portable token store a serial number, and a first stage diversified key (which may for example be the result of the encryption of the serial number by a master key). Each portable token may send its serial number to the other portable token, and may apply a diversification mechanism in order to obtain a second stage diversified key. If the properties of the diversification mechanism are well chosen, diversifying the same master key first by the first serial number and then by the second serial number leads to the same result as diversifying the master key first by the second serial number and then by the first serial number, therefore both portable tokens end up sharing the same diversified key. In alternative embodiments, it is not possible to rely on such properties of the diversification mechanism and, the diversification involves a communication with a trusted third party storing a master key or a set of master keys, the trusted third party computing the diversified keys on behalf of the two portable tokens (in order ot avoid storing any master key in the portable tokens, which could lead to security issues in some environments). The second portable token ICC2 is set to concatenate the received random number and the notification to be sent. The random may appear first and the notification second or vice versa. It is even possible to multiplex the random and the notification, for example one byte from the random, then one byte from the notification, then the following byte from the random, the following byte from the notification, etc. The second portable token ICC2 is set to compute a MAC of the concatenation with the symmetric key. MAC stands for Message Authentication Code. MACs are well known in the art, there are plenty of ways to compute them. The second portable token ICC2 is set to send the MAC together with the notification. The first portable token ICC1 is set to verify that the MAC of the concatenation is correct with the symmetric key. To do so, the first portable token ICC1 may simply recomputed the MAC and compare the results.

In yet another alternative embodiment, the system carries out the sealing as follows. The first and second portable tokens (ICC1, ICC2) are set to share a symmetric key, for example in one of the above described manners. The first portable token ICC1 is set to encrypt the random number with the symmetric key before sending it. The second portable token ICC2 is set to decrypt the random number with the symmetric key, and to encrypt the notification with a symmetric key which value is equal to the random number. For example, the random number may correspond to a DES, 3DES, AES or RC4 key. If the notification is too long, known mechanisms can be applied for the encryption. For example, in case of DES base encryption, it is possible to use the DES CBC or DES ECB encryption modes.

The invention also relates to a portable token ICC1 alone. Such portable token is similar to the first portable token of the systems according to the invention. The portable token is set to enforce an access condition AC, wherein the access condition AC is stored in the portable token ICC1 and comprises an identifier of an authentication method. The access condition AC contains a reference to a second portable token ICC2. For the access condition AC to be met, the first portable token ICC1 must receive a notification of the success of the authentication method by the second portable token ICC2.

In preferred embodiments, the portable token ICC1 is further set to generate a random number, to send the random number to the second portable token ICC2, and to accept the notification from the second portable token ICC2 only if it verifies that the second portable token ICC2 has sealed the notification with the random number.

The invention also relate to a method for a first portable token ICC1 to delegate part of the enforcement of an access condition AC of said first portable token ICC1 to a second portable token ICC2. This method can be applied in above described systems according to the invention. The method can also be applied to the portable token according to the invention. In the method according the invention, the access condition AC is stored in the first portable token ICC1 and comprises an identifier of an authentication method, wherein the access condition AC contains a reference to the second portable token ICC2, and wherein for the access condition AC to be met, the first portable token ICC1 must be notified of the success of the authentication method by the second portable token ICC2.

In a preferred method, the portable token ICC1 is set to generate a random number, to send the random number to the second portable token ICC2, and to accept the notification from the second portable token ICC2 only if it verifies that the second portable token ICC2 has sealed the notification with the random number.

A very specific embodiment of the invention is described below bearing in mind that many variants are possible.

A terminal TERM comprises a personal computer PC and a double slot reader RDR, the personal computer comprising a client application running on its a central processing unit, and managing the communication with and between two portable tokens (ICC1 and ICC2) which are inserted in the respective slots. The first portable token ICC1 stores private data Pdata inside a file protected by access conditions AC, the access conditions AC comprising an access mode byte for READ BINARY encoded according to table 17 in ISO/IEC 7816-4 clause 5.4.3.1, and security conditions encoded in the form of a reference to a security environment (according to table 20 in ISO/IEC 7816-4 clause 5.4.3.1). This security environment contains a CRT (control reference template) comprising an authentication data object (according to clause 6.3.1) with the following parameters:
- a tag 'A4' and a key reference (KeyRef) that contains an identifier of a certificate (or of a bare public key) stored in the second portable token ICC2, and
- an algorithm identifier (ALGid) that contains a value meaning "implicit algorithm".

The public key (PuK2) is stored securely inside the first portable token ICC1 and loaded preferably at personalization time. It is very important to store appropriate values in the CRT in order to have a proper delegation of access conditions, and this is one of the key aspects of the invention. ALGld and KeyRef currently refer to non-standard protocols but they could be standardized in the future.

The use of these protocols is illustrated on Figure 2. The terminal TERM retrieves the FCP of the file containing Pdata, then TERM requests a challenge CRND from the first portable token ICC1, CRND being a random number RND generated by the first portable token ICC1 and encrypted with the public key PuK2 of the second portable token ICC2. This challenge is transferred by the client application of the terminal TERM to the second portable token ICC2. In this example, the challenge is transferred with a PUT DATA APDU command and is encapsulated in appropriate data object (DO) according ISO/IEC 7816-4. Upon reception of CRND, the second portable token ICC2 recovers the random RND from the challenge CRND. This random is used afterwards by the second portable token ICC2 as a key to encipher the status word PINV-SW acknowledging the proper authentication (PIN verification) on the second portable token ICC2. TERM can then deliver enciphered PINV-SW (CSW) to the first portable token ICC1 in order to prove that the second portable token ICC2 has validated the PIN code of his holder. At that stage, the first portable token ICC1 allows TERM to access Pdata in the current session.

The method may be be performed through PC/SC-based readers currently endorsed by ISO/IEC 24727-4 and prCEN/TS 15480-3. This is extremely advantageous since this allows the adoption of access condition delegation in the context of ISO/IEC 24727-4 and prCEN/TS 15480-3, without having to standardize specific readers, or without having to cope with proprietary or de facto readers. This is very advantageous in the context of eAdmin, eID, eGov services deployment. The modification required on the portable token could be implemented in java. In particular, if the portable tokens are java smart cards, this could be done in applets loaded on the smart card thanks to javacard and to existing embedded libraries generally already present in the smart card.

If the client application of TERM sends the CRND to a second portable token, this latter cannot use it since it does not have access to the appropriate private key (PrK2). If a wrong status word is returned to the first portable token ICC1 by the client application of TERM, it will be rejected, and the same is true if a proper status word is not be enciphered with the appropriate RND. The status word SW cannot be replayed by the client application since the RND value used to encipher it (and produce a unique CSW) serves only once. The CRND value cannot be replayed by the client application of the TERM since a RND value serves only once.

In a variant of this method, a mutual authentication between both portable tokens is carried out.

In another variant, a client server authentication according EN 14890-1&2 or CEN/TS 15480-2, takes place between the client application and the second portable token ICC2, and consecutively a secure messaging may even take place to transmit securely information between both parties.

There are several possible variants for referencing the protocol (i.e. for referencing the authentication method of the second portable token in the access condition of the first authentication token). In particular:

In one variant, the cryptographic mechanism reference stored in the FCP (file control parameters) of a file (either EF or DF) that hosts protected data is preferably compliant with ISO/IEC 7816-4 clause 5.4.2: a tag 'AC' may be used as a template for encapsulating two or more data object, the first one being '80' in order to indicate the internal reference of the algorithm, and the second being '06' in order to indicate the object identifier assigned to the algorithm.

In another variant, any cryptogram descriptor byte defining the content of a cryptogram (DO-CRND in the example) according to the protocol can be encapsulated in a cryptogram content reference identified by the template '8E' that is nested in a CRT (control reference template) according ISO/IEC 7816-4 clause 6.3.2 tables 33 and 36.

In another variant, it is possible to use a qualifier parameter, according to ISO/IEC 24727-3, in order to reference the protocol. Such a qualifier is a field among the fields comprising the Differential-Identity data structure (ISO/IEC 24727-3 clause 5.4.2). For instance, once recovered by a client application, a Differential-Identity containing a qualifier that references the protocol may be used through a DIDAuthenticate request via the SAL-API to start the execution of the protocol.

In another variant, it is also possible to use the Authentication Protocol parameter, as per ISO/IEC 24727-3, to reference the protocol. Such an Authentication Protocol is a field among the fields comprising the Differential-Identity data structure (ISO/IEC 24727-3 clause 5.4.2). For instance, once recovered by a client application, a Differential-Identity containing an Authentication Protocol that references the protocol, may be used through a DIDAuthenticate request via the SAL-API to start the execution of the protocol.

In another variant, it is possible to use any attribute as per ISO/IEC 7816-15 to reference the protocol, including attributes such as Algld within the supportedAlgorithm descriptor, or attributes within the dataContainerObjects described in EF.DCOD file.

## Claims

1. System comprising two portable tokens (ICC1, ICC2), the first portable token (ICC1) being set to enforce an access condition (AC), wherein the access condition (AC) is stored in the first portable token (ICC1) and comprises an identifier of an authentication method, the system being **characterized in that** the access condition (AC) contains a reference to the second portable token (ICC2), and **in that** for the access condition (AC) to be met, the first portable token (ICC1) must be notified of the success of the authentication method by the second portable token (ICC2).

2. System according to claim 1, wherein the first portable token (ICC1) is set to generate a random number, to send the random number to the second portable token (ICC2), and to accept the notification from the second portable token (ICC2) only if it verifies that the second portable token (ICC2) has sealed the notification with the random number.

3. System according to claim 2, wherein
• the second portable token (ICC2) is set to store a private key, to concatenate the received random number and the notification to be sent, to sign the concatenation with the private key, and to send the signature together with the notification, and
• the first portable token (ICC1) is set to obtain a public key of the second portable token (ICC2) corresponding to said private key, and to verify that the signature of the concatenation is correct with the public key.

4. System according to claim 2, wherein
• the first portable token (ICC1) is set to obtain a public key of the second portable token (ICC2), and to encrypt the random number with the public key before sending it, and
• the second portable token (ICC2) is set to store a private key corresponding to the public key, to decrypt the random number with the private key, and to encrypt the notification with a symmetric key which value is equal to the random number.

5. System according to claim 2, wherein the first and second portable tokens (ICC1, ICC2) are set to share a symmetric key, and wherein
• the second portable token (ICC2) is set to concatenate the received random number and the notification to be sent, to compute a MAC of the concatenation with the symmetric key, and to send the MAC together with the notification, and
• the first portable token (ICC1) is set to verify that the MAC of the concatenation is correct with the symmetric key.

6. System according to claim 2, wherein the first and second portable tokens (ICC1, ICC2) are set to share a symmetric key, and wherein
• the first portable token (ICC1) is set to encrypt the random number with the symmetric key before sending it, and
• the second portable token (ICC2) is set to decrypt the random number with the symmetric key, and to encrypt the notification with a symmetric key which value is equal to the random number.

7. Portable token (ICC1) set to enforce an access condition (AC), wherein the access condition (AC) is stored in the portable token (ICC1) and comprises an identifier of an authentication method, **characterized in that** the access condition (AC) contains a reference to a second portable token (ICC2), and **in that** for the access condition (AC) to be met, the first portable token (ICC1) must receive a notification of the success of the authentication method by the second portable token (ICC2).

8. Portable token (ICC1) according to claim 7, further set to generate a random number, to send the random number to the second portable token (ICC2), and to accept the notification from the second portable token (ICC2) only if it verifies that the second portable token (ICC2) has sealed the notification with the random number.

9. Method for a first portable token (ICC1) to delegate part of the enforcement of an access condition (AC) of said first portable token (ICC1) to a second portable token (ICC2), wherein the access condition (AC) is stored in the first portable token (ICC1) and comprises an identifier of an authentication method, wherein the access condition (AC) contains a reference to the second portable token (ICC2), and wherein for the access condition (AC) to be met, the first portable token (ICC1) must be notified of the success of the authentication method by the second portable token (ICC2).

10. Method according to claim 9, wherein the portable token (ICC1) is set to generate a random number, to send the random number to the second portable token (ICC2), and to accept the notification from the second portable token (ICC2) only if it verifies that the second portable token (ICC2) has sealed the notification with the random number.
